# EUROPEAN PATENT APPLICATION

(11) **EP 2 468 371 A1**
(43) Date of publication of application: **27.06.2012**
(21) Application number: 11192879.2
(22) Date of filing: 09.12.2011
(51) Int. Cl.: A63F 13/00, G10L 13/04, G10K 15/02

(54) **Audio data generation method and apparatus**

(30) Priority: 21.12.2010 GB 201021643
(71) Applicant: Sony Computer Entertainment Europe Ltd., London W1F 7LP (GB)
(72) Inventor: Fournel, Nicolas, London, W1F 7LP (GB)
(74) Representative: Ealey, Douglas Ralph

(57) **Abstract**

An audio data generation method comprises generating a first parametric description of features of a first sound. The first parametric description comprises a first set of parameters which relates to the features of the first sound. The method comprises generating a second parametric description of features of a second sound. The second parametric description comprises a second set of parameters which relates to the features of the second sound. The method further comprises generating audio data for output based on a combination of one or more properties of the first parametric description and one or more properties of the second parametric description.

## Description

The present invention relates to an audio data generation method and apparatus.

Modem video games typically feature high-quality graphics and game audio that seek to provide a sense of immersion and atmosphere for a player or players. To help provide a sense of immersion, sound effects such as impacts of debris, raindrops falling on a surface, footsteps and the like may be included in the game audio.

Typically, to generate sound effects such as impacts of debris against a surface, a sound designer may record many sound samples of objects of a particular material (e.g. wood, glass, metal and the like) hitting a surface. The sound designer may then write a script to trigger when the samples should be output so as to simulate the sound of debris hitting a surface (for example, as a result of an explosion).

However, such a technique typically requires that a large number of different samples may need to be stored on a game disc or in memory and output substantially in real time. This can occupy a large amount of storage. Additionally, the sound designer may spend a great deal of time scripting when the samples are to be played back and articulated. This can be very time-consuming for the sound designer and slow down the rate at which audio for a game may be developed.

Furthermore, where the sound effects are highly dependent on game physics (for example, those relating to explosions, impacts and the like), and/or highly repetitive (such as those relating to falling raindrops or footsteps), many samples and complex scripts may be needed to provide a satisfactory audio experience for a player. Although techniques such as the use of multiple waveforms, streaming and scripting may be used, these involve manipulating the recorded samples, which can be require a substantial amount of processing and memory resources, thus reducing resources available for other features of game play.

The present invention seeks to alleviate or mitigate the above problems.

In a first aspect, there is provided an audio data generation method, comprising generating a first parametric description of features of a first sound, the first parametric description comprising a first set of parameters which relates to the features of the first sound, generating a second parametric description of features of a second sound, the second parametric description comprising a second set of parameters which relates to the features of the second sound, and generating audio data for output based on a combination of one or more properties of the first parametric description and one or more properties of the second parametric description.

In a second aspect, there is provided an audio data generation apparatus, comprising means for generating a first parametric description of features of a first sound, the first parametric description comprising a first set of parameters which relate to the features of the first sound, means for generating a second parametric description of features of a second sound, the second parametric description comprising a second set of parameters which relate to the features of the second sound, and means for generating audio data for output based on a combination of one or more properties the first parametric description and one or more properties of the second parametric description.

Various other respective features and aspects of the invention are defined in the appended claims.

For example, a sound designer may like a pitch envelope of a particular sound and wish to apply that pitch envelope to another sound to help in the audio design process. Therefore, in embodiments, a first parametric description of features of a first sound and a second parametric description of features of a second sound are generated. For the example of a pitch envelope, the first set of parameters could relate to the pitch envelope of the sound which the sound designer liked, and the second set of parameters could describe the waveform of the second sound.

Accordingly, in the pitch envelope example, the audio data is generated for output by applying the pitch envelope of the first sound to modify a pitch envelope of the second sound. In other words, one or more properties of the first parametric description and the second parametric description may be combined so as to generate audio data for output. Accordingly, embodiments of the present invention can allow the sound designer to quickly and easily generate audio data for output by combining properties of the first parametric description and the second parametric description.

By combining properties of parametric descriptions, embodiments of the present invention advantageously reduce processing and memory resources needed to generate audio data, because the properties can be combined based on parameters of the parametric descriptions rather than having many sampled sounds or complex scripts to describe the sounds. Furthermore, the sound design process can be speeded up because a sound designer can easily combine audio properties of sounds which they wish to use.

Embodiments of the present invention will now be described by way of example with reference to the accompanying drawings, in which:
Figure 1 is a schematic diagram of an entertainment device;
Figure 2 is a schematic diagram of a cell processor;
Figure 3 is a schematic diagram of a video graphics processor;
Figure 4 is a flowchart of a method of audio data generation in accordance with embodiments of the present invention;
Figure 5 is a schematic diagram of an interface for generating audio data in accordance with embodiments of the present invention;
Figure 6 is a schematic diagram of an interface for selecting an audio object model in accordance with embodiments of the present invention;
Figure 7 is a schematic diagram of an interface for selecting an event distribution model in accordance with embodiments of the present invention;
Figure 8 is a schematic diagram of an interface for selecting a curve model in accordance with embodiments of the present invention;
Figure 9 is a schematic diagram of an interface for arranging modules to generate audio data in accordance with embodiments of the present invention;
Figure 10 is a schematic diagram of an interface for controlling parameters of a module in accordance with embodiments of the present invention;
Figure 11 is a schematic diagram of generation of audio object models in accordance with embodiments of the present invention;
Figure 12 is a schematic diagram of an example of generation of audio data relating to game creature vocalisations in accordance with embodiments of the present invention;
Figure 13 is a schematic diagram of an example of generation of audio data relating to debris impacts in accordance with embodiments of the present invention; and

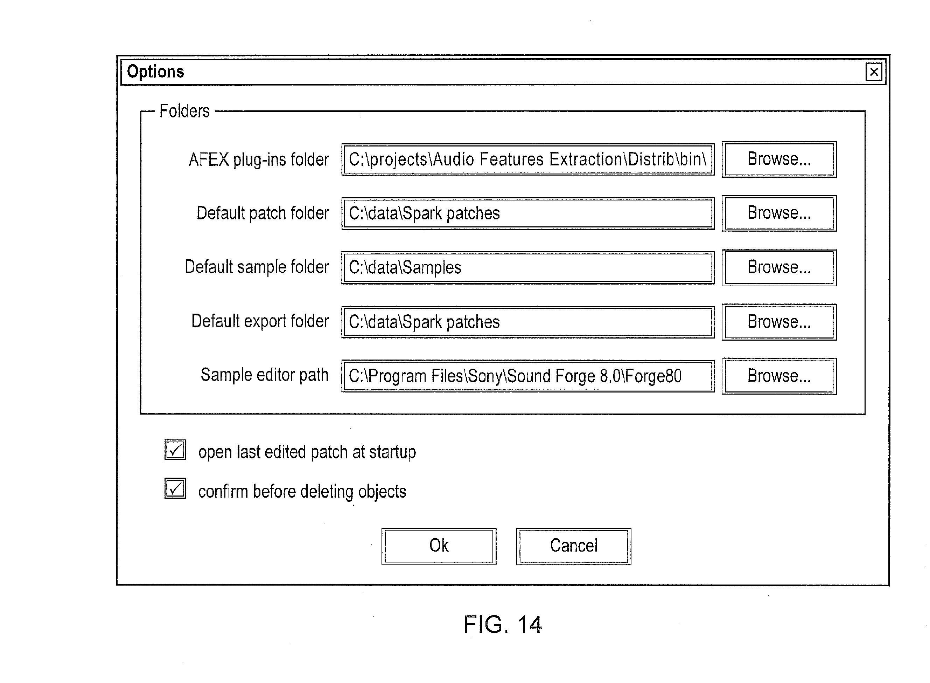

Figure 14 is a schematic diagram of an options menu window in accordance with embodiments of the present invention.

An audio data generation method and apparatus are disclosed. In the following description, a number of specific details are presented in order to provide a thorough understanding of embodiments of the present invention. It will be apparent however to a person skilled in the art that these specific details need not be employed to practise the present invention. Conversely, specific details known to the person skilled in the art are omitted for the purposes of clarity in presenting the embodiments.

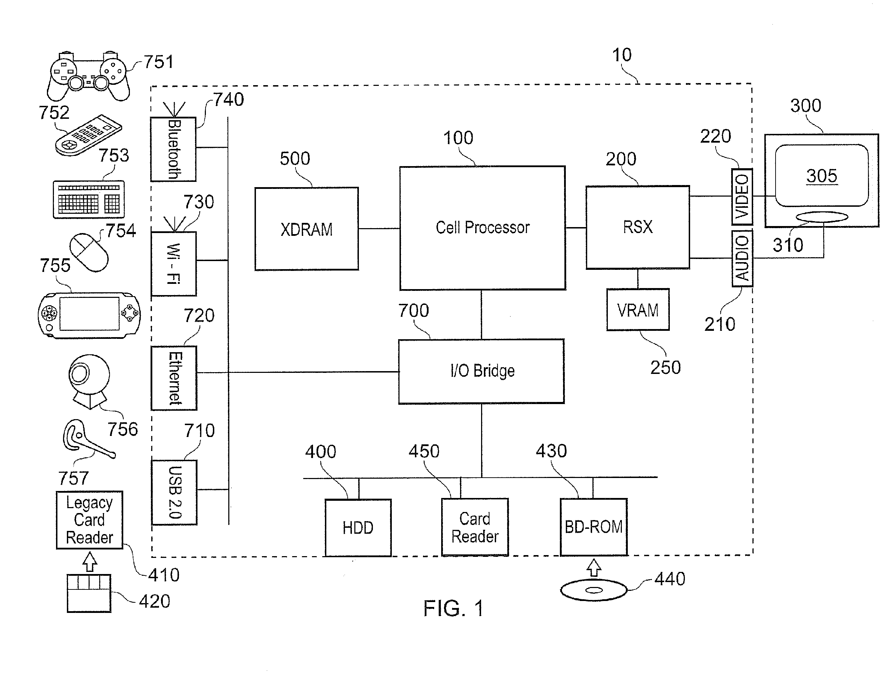

Figure 1 schematically illustrates the overall system architecture of the Sony® Playstation 3® entertainment device. A system unit 10 is provided, with various peripheral devices connectable to the system unit.

The system unit 10 comprises: a Cell processor 100; a Rambus® dynamic random access memory (XDRAM) unit 500; a Reality Synthesiser graphics unit 200 with a dedicated video random access memory (VRAM) unit 250; and an I/O bridge 700.

The system unit 10 also comprises a Blu Ray® Disk BD-ROM® optical disk reader 430 for reading from a disk 440 and a removable slot-in hard disk drive (HDD) 400, accessible through the I/O bridge 700. Optionally the system unit also comprises a memory card reader 450 for reading compact flash memory cards, Memory Stick® memory cards and the like, which is similarly accessible through the I/O bridge 700.

The I/O bridge 700 also connects to four Universal Serial Bus (USB) 2.0 ports 710; a gigabit Ethernet port 720; an IEEE 802.11b/g wireless network (Wi-Fi) port 730; and a Bluetooth® wireless link port 740 capable of supporting up to seven Bluetooth connections.

In operation the I/O bridge 700 handles all wireless, USB and Ethernet data, including data from one or more game controllers 751. For example when a user is playing a game, the I/O bridge 700 receives data from the game controller 751 via a Bluetooth link and directs it to the Cell processor 100, which updates the current state of the game accordingly.

The wireless, USB and Ethernet ports also provide connectivity for other peripheral devices in addition to game controllers 751, such as: a remote control 752; a keyboard 753; a mouse 754; a portable entertainment device 755 such as a Sony Playstation Portable® entertainment device; a video camera such as an EyeToy® video camera 756; and a microphone headset 757. Such peripheral devices may therefore in principle be connected to the system unit 10 wirelessly; for example the portable entertainment device 755 may communicate via a Wi-Fi ad-hoc connection, whilst the microphone headset 757 may communicate via a Bluetooth link.

The provision of these interfaces means that the Playstation 3 device is also potentially compatible with other peripheral devices such as digital video recorders (DVRs), set-top boxes, digital cameras, portable media players, Voice over IP telephones, mobile telephones, printers and scanners.

In addition, a legacy memory card reader 410 may be connected to the system unit via a USB port 710, enabling the reading of memory cards 420 of the kind used by the Playstation® or Playstation 2® devices.

In the present embodiment, the game controller 751 is operable to communicate wirelessly with the system unit 10 via the Bluetooth link. However, the game controller 751 can instead be connected to a USB port, thereby also providing power by which to charge the battery of the game controller 751. In addition to one or more analog joysticks and conventional control buttons, the game controller is sensitive to motion in 6 degrees of freedom, corresponding to translation and rotation in each axis. Consequently gestures and movements by the user of the game controller may be translated as inputs to a game in addition to or instead of conventional button or joystick commands. Optionally, other wirelessly enabled peripheral devices such as the Playstation Portable device or the Playstation Move (RTM) may be used as a controller. In the case of the Playstation Portable device, additional game or control information (for example, control instructions or number of lives) may be provided on the screen of the device. In the case of the Playstation Move, control information may be provided both by internal motion sensors and by video monitoring of the light on the Playstation Move device. Other alternative or supplementary control devices may also be used, such as a dance mat (not shown), a light gun (not shown), a steering wheel and pedals (not shown) or bespoke controllers, such as a single or several large buttons for a rapid-response quiz game (also not shown).

The remote control 752 is also operable to communicate wirelessly with the system unit 10 via a Bluetooth link. The remote control 752 comprises controls suitable for the operation of the Blu Ray Disk BD-ROM reader 430 and for the navigation of disk content.

The Blu Ray Disk BD-ROM reader 430 is operable to read CD-ROMs compatible with the Playstation and PlayStation 2 devices, in addition to conventional pre-recorded and recordable CDs, and so-called Super Audio CDs. The reader 430 is also operable to read DVD-ROMs compatible with the Playstation 2 and PlayStation 3 devices, in addition to conventional pre-recorded and recordable DVDs. The reader 430 is further operable to read BD-ROMs compatible with the Playstation 3 device, as well as conventional pre-recorded and recordable Blu-Ray Disks.

The system unit 10 is operable to supply audio and video, either generated or decoded by the Playstation 3 device via the Reality Synthesiser graphics unit 200, through audio and video connectors to a display and sound output device 300 such as a monitor or television set having a display 305 and one or more loudspeakers 310. The audio connectors 210 may include conventional analogue and digital outputs whilst the video connectors 220 may variously include component video, S-video, composite video and one or more High Definition Multimedia Interface (HDMI) outputs. Consequently, video output may be in formats such as PAL or NTSC, or in 720p, 1080i or 1080p high definition.

Audio processing (generation, decoding and so on) is performed by the Cell processor 100. The Playstation 3 device's operating system supports Dolby® 5.1 surround sound, Dolby® Theatre Surround (DTS), and the decoding of 7.1 surround sound from Blu-Ray® disks.

In the present embodiment, the video camera 756 comprises a single charge coupled device (CCD), an LED indicator, and hardware-based real-time data compression and encoding apparatus so that compressed video data may be transmitted in an appropriate format such as an intra-image based MPEG (motion picture expert group) standard for decoding by the system unit 10. The camera LED indicator is arranged to illuminate in response to appropriate control data from the system unit 10, for example to signify adverse lighting conditions. Embodiments of the video camera 756 may variously connect to the system unit 10 via a USB, Bluetooth or Wi-Fi communication port. Embodiments of the video camera may include one or more associated microphones and also be capable of transmitting audio data. In embodiments of the video camera, the CCD may have a resolution suitable for high-definition video capture. In use, images captured by the video camera may for example be incorporated within a game or interpreted as game control inputs.

In general, in order for successful data communication to occur with a peripheral device such as a video camera or remote control via one of the communication ports of the system unit 10, an appropriate piece of software such as a device driver should be provided. Device driver technology is well-known and will not be described in detail here, except to say that the skilled man will be aware that a device driver or similar software interface may be required in the present embodiment described.

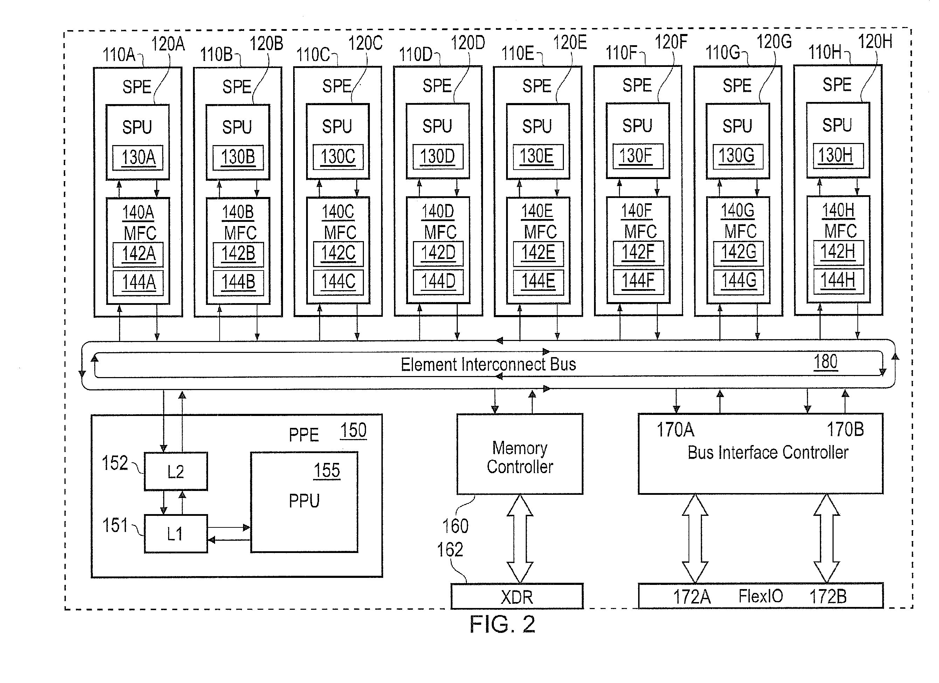

Referring now to Figure 2, the Cell processor 100 has an architecture comprising four basic components: external input and output structures comprising a memory controller 160 and a dual bus interface controller 170A,B; a main processor referred to as the Power Processing Element 150; eight co-processors referred to as Synergistic Processing Elements (SPEs) 110A-H; and a circular data bus connecting the above components referred to as the Element Interconnect Bus 180. The total floating point performance of the Cell processor is 218 GFLOPS, compared with the 6.2 GFLOPs of the Playstation 2 device's Emotion Engine.

The Power Processing Element (PPE) 150 is based upon a two-way simultaneous multithreading Power 970 compliant PowerPC core (PPU) 155 running with an internal clock of 3.2 GHz. It comprises a 512 kB level 2 (L2) cache and a 32 kB level 1 (L1) cache. The PPE 150 is capable of eight single position operations per clock cycle, translating to 25.6 GFLOPs at 3.2 GHz. The primary role of the PPE 150 is to act as a controller for the Synergistic Processing Elements 110A-H, which handle most of the computational workload. In operation the PPE 150 maintains a job queue, scheduling jobs for the Synergistic Processing Elements 110A-H and monitoring their progress. Consequently each Synergistic Processing Element 110A-H runs a kernel whose role is to fetch a job, execute it and synchronise with the PPE 150.

Each Synergistic Processing Element (SPE) 110A-H comprises a respective Synergistic Processing Unit (SPU) 120A-H, and a respective Memory Flow Controller (MFC) 140A-H comprising in turn a respective Dynamic Memory Access Controller (DMAC) 142AH, a respective Memory Management Unit (MMU) 144A-H and a bus interface (not shown). Each SPU 120A-H is a RISC processor clocked at 3.2 GHz and comprising 256 kB local RAM 130A-H, expandable in principle to 4 GB. Each SPE gives a theoretical 25.6 GFLOPS of single precision performance. An SPU can operate on 4 single precision floating point members, 4 32-bit numbers, 8 16-bit integers, or 16 8-bit integers in a single clock cycle. In the same clock cycle it can also perform a memory operation. The SPU 120A-H does not directly access the system memory XDRAM 500; the 64-bit addresses formed by the SPU 120A-H are passed to the MFC 140A-H which instructs its DMA controller 142A-H to access memory via the Element Interconnect Bus 180 and the memory controller 160.

The Element Interconnect Bus (EIB) 180 is a logically circular communication bus internal to the Cell processor 100 which connects the above processor elements, namely the PPE 150, the memory controller 160, the dual bus interface 170A,B and the 8 SPEs 110A-H, totalling 12 participants. Participants can simultaneously read and write to the bus at a rate of 8 bytes per clock cycle. As noted previously, each SPE 110A-H comprises a DMAC 142A-H for scheduling longer read or write sequences. The EIB comprises four channels, two each in clockwise and anti-clockwise directions. Consequently for twelve participants, the longest step-wise data-flow between any two participants is six steps in the appropriate direction. The theoretical peak instantaneous EIB bandwidth for 12 slots is therefore 96B per clock, in the event of full utilisation through arbitration between participants. This equates to a theoretical peak bandwidth of 307.2 GB/s (gigabytes per second) at a clock rate of 3.2GHz.

The memory controller 160 comprises an XDRAM interface 162, developed by Rambus Incorporated. The memory controller interfaces with the Rambus XDRAM 500 with a theoretical peak bandwidth of 25.6 GB/s.

The dual bus interface 170A,B comprises a Rambus FlexIO® system interface 172A,B. The interface is organised into 12 channels each being 8 bits wide, with five paths being inbound and seven outbound. This provides a theoretical peak bandwidth of 62.4 GB/s (36.4 GB/s outbound, 26 GB/s inbound) between the Cell processor and the I/O Bridge 700 via controller 170A and the Reality Simulator graphics unit 200 via controller 170B.

Data sent by the Cell processor 100 to the Reality Simulator graphics unit 200 will typically comprise display lists, being a sequence of commands to draw vertices, apply textures to polygons, specify lighting conditions, and so on.

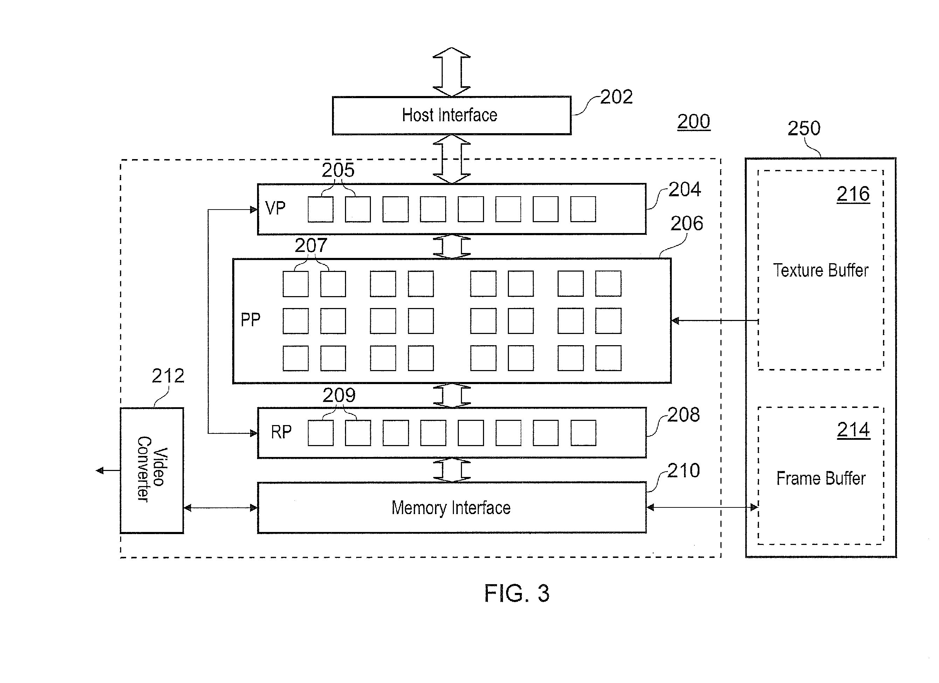

Referring now to Figure 3, the Reality Simulator graphics (RSX) unit 200 is a video accelerator based upon the NVidia® G70/71 architecture that processes and renders lists of commands produced by the Cell processor 100. The RSX unit 200 comprises a host interface 202 operable to communicate with the bus interface controller 170B of the Cell processor 100; a vertex pipeline 204 (VP) comprising eight vertex shaders 205; a pixel pipeline 206 (PP) comprising 24 pixel shaders 207; a render pipeline 208 (RP) comprising eight render output units (ROPs) 209; a memory interface 210; and a video converter 212 for generating a video output. The RSX 200 is complemented by 256 MB double data rate (DDR) video RAM (VRAM) 250, clocked at 600MHz and operable to interface with the RSX 200 at a theoretical peak bandwidth of 25.6 GB/s. In operation, the VRAM 250 maintains a frame buffer 214 and a texture buffer 216. The texture buffer 216 provides textures to the pixel shaders 207, whilst the frame buffer 214 stores results of the processing pipelines. The RSX can also access the main memory 500 via the EIB 180, for example to load textures into the VRAM 250.

The vertex pipeline 204 primarily processes deformations and transformations of vertices defining polygons within the image to be rendered.

The pixel pipeline 206 primarily processes the application of colour, textures and lighting to these polygons, including any pixel transparency, generating red, green, blue and alpha (transparency) values for each processed pixel. Texture mapping may simply apply a graphic image to a surface, or may include bump-mapping (in which the notional direction of a surface is perturbed in accordance with texture values to create highlights and shade in the lighting model) or displacement mapping (in which the applied texture additionally perturbs vertex positions to generate a deformed surface consistent with the texture).

The render pipeline 208 performs depth comparisons between pixels to determine which should be rendered in the final image. Optionally, if the intervening pixel process will not affect depth values (for example in the absence of transparency or displacement mapping) then the render pipeline and vertex pipeline 204 can communicate depth information between them, thereby enabling the removal of occluded elements prior to pixel processing, and so improving overall rendering efficiency. In addition, the render pipeline 208 also applies subsequent effects such as full-screen anti-aliasing over the resulting image.

Both the vertex shaders 205 and pixel shaders 207 are based on the shader model 3.0 standard. Up to 136 shader operations can be performed per clock cycle, with the combined pipeline therefore capable of 74.8 billion shader operations per second, outputting up to 840 million vertices and 10 billion pixels per second. The total floating point performance of the RSX 200 is 1.8 TFLOPS.

Typically, the RSX 200 operates in close collaboration with the Cell processor 100; for example, when displaying an explosion, or weather effects such as rain or snow, a large number of particles must be tracked, updated and rendered within the scene. In this case, the PPU 155 of the Cell processor may schedule one or more SPEs 110A-H to compute the trajectories of respective batches of particles. Meanwhile, the RSX 200 accesses any texture data (e.g. snowflakes) not currently held in the video RAM 250 from the main system memory 500 via the element interconnect bus 180, the memory controller 160 and a bus interface controller 170B. The or each SPE 110A-H outputs its computed particle properties (typically coordinates and normals, indicating position and attitude) directly to the video RAM 250; the DMA controller 142A-H of the or each SPE 110A-H addresses the video RAM 250 via the bus interface controller 170B. Thus in effect the assigned SPEs become part of the video processing pipeline for the duration of the task.

In general, the PPU 155 can assign tasks in this fashion to six of the eight SPEs available; one SPE is reserved for the operating system, whilst one SPE is effectively disabled. The disabling of one SPE provides a greater level of tolerance during fabrication of the Cell processor, as it allows for one SPE to fail the fabrication process. Alternatively if all eight SPEs are functional, then the eighth SPE provides scope for redundancy in the event of subsequent failure by one of the other SPEs during the life of the Cell processor.

The PPU 155 can assign tasks to SPEs in several ways. For example, SPEs may be chained together to handle each step in a complex operation, such as accessing a DVD, video and audio decoding, and error masking, with each step being assigned to a separate SPE. Alternatively or in addition, two or more SPEs may be assigned to operate on input data in parallel, as in the particle animation example above.

Software instructions implemented by the Cell processor 100 and/or the RSX 200 may be supplied at manufacture and stored on the HDD 400, and/or may be supplied on a data carrier or storage medium such as an optical disk or solid state memory, or via a transmission medium such as a wired or wireless network or internet connection, or via combinations of these.

The software supplied at manufacture comprises system firmware and the Playstation 3 device's operating system (OS). In operation, the OS provides a user interface enabling a user to select from a variety of functions, including playing a game, listening to music, viewing photographs, or viewing a video. The interface takes the form of a so-called cross media-bar (XMB), with categories of function arranged horizontally. The user navigates by moving through the function icons (representing the functions) horizontally using the game controller 751, remote control 752 or other suitable control device so as to highlight a desired function icon, at which point options pertaining to that function appear as a vertically scrollable list of option icons centred on that function icon, which may be navigated in analogous fashion. However, if a game, audio or movie disk 440 is inserted into the BD-ROM optical disk reader 430, the Playstation 3 device may select appropriate options automatically (for example, by commencing the game), or may provide relevant options (for example, to select between playing an audio disk or compressing its content to the HDD 400).

In addition, the OS provides an on-line capability, including a web browser, an interface with an on-line store from which additional game content, demonstration games (demos) and other media may be downloaded, and a friends management capability, providing on-line communication with other Playstation 3 device users nominated by the user of the current device; for example, by text, audio or video depending on the peripheral devices available. The on-line capability also provides for on-line communication, content download and content purchase during play of a suitably configured game, and for updating the firmware and OS of the Playstation 3 device itself. It will be appreciated that the term "on-line" does not imply the physical presence of wires, as the term can also apply to wireless connections of various types.

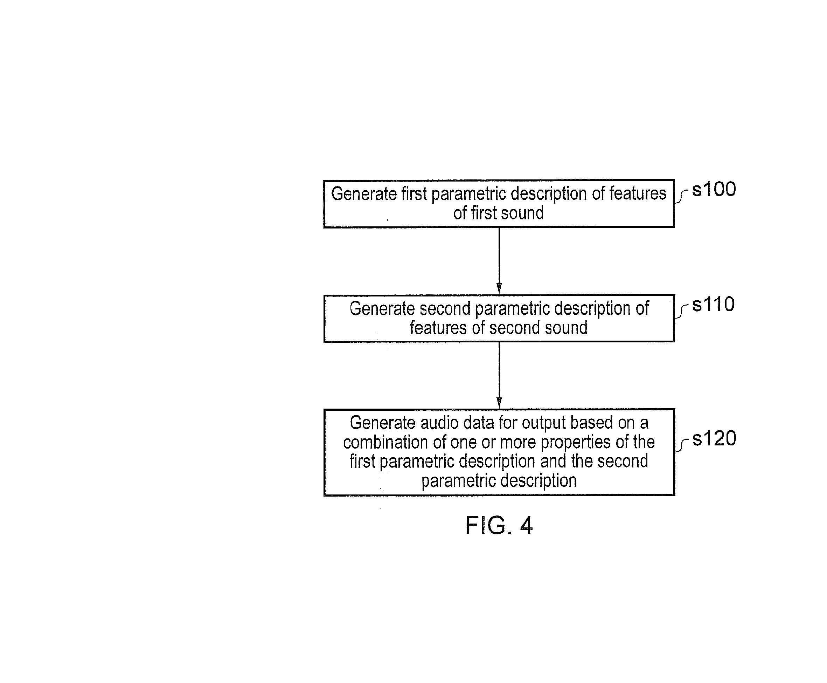

A method and apparatus for generating audio data in accordance with embodiments of the present invention will now be described with reference to Figures 4 to 13. In embodiments, audio data is generated using an Audio Data Generation Tool referred to as SPARK (**S**ony **P**rocedural **A**udio **R**eal-Time **K**ernel). The operation of the Audio Data Generation Tool will now be described in more detail below.

Figure 4 is a flowchart of a method of audio data generation in accordance with embodiments of the present invention using the Audio Data Generation Tool.

As mentioned above, a sound designer may wish to develop audio for a game to provide an immersive sound experience for a game player. However, for certain types of sounds, such as those relating to footsteps, raindrops and the like (repetitive sounds), and/or sound effects which may be highly dependent on game physics (for example, those relating to explosions, impacts and the like), a sound designer may spend a lot of time scripting the sounds. Additionally, data relating to sounds generated in this way may require substantial memory and processing resources to implement.

To address this problem, at a step s100, the system unit 10 generates a first parametric description of a first sound. The first parametric description comprises a first set of parameters which relate to features of the first sound.

For example, a sound designer may like a pitch envelope of a particular sound and wish to apply that pitch envelope to another sound to help in the audio design process. Accordingly, in embodiments, the sound designer can control the system unit 10 to generate the first parametric description. The way in which the first parametric description is generated according to embodiments of the invention will be described in more detail later below.

In the example given above with respect to the pitch envelope, the first set of parameters would relate to the pitch envelope of the sound which the sound designer liked. However, it will be appreciated that any appropriate features of the first sound could be used to generate the first set of parameters. Embodiments of the first parametric description will be described in more detail later below.

At a step s110, the system unit 10 generates a second parametric description of features of the second sound. The second parametric description comprises a second set of parameters which relate to features of the second sound. In embodiments, the sound designer can control the system unit 10 to generate the second parametric description. The way in which the second parametric description is generated according to embodiments of the invention will be described in more detail later below.

Referring to the example given above with respect to the pitch envelope, the second set of parameters could describe the waveform of the second sound. However, it will be appreciated that the second set of parameters could relate to any suitable features of the second sound. More generally, in embodiments at least one of the first set of parameters and the second set of parameters comprises waveform data which describes the waveform of the respective first sound or second sound.

At a step s120, the system unit 10 generates audio data for output based on a combination of one or more properties of the first parametric description and one or more properties of the second parametric description.

Referring to the pitch envelope example mentioned above, the system unit 10 could generate the audio data for output by applying the pitch envelope of the first sound to modify a pitch envelope of the second sound. More generally, in embodiments, the combination comprises modifying one or more properties of the second set of parameters based on the first set of parameters. However, it will be appreciated that the properties of the first parametric description and the second parametric description may be combined in any other suitable manner. Accordingly, embodiments of the present invention can allow the sound designer to quickly and easily generate audio data for output by combining properties of the first parametric description and the second parametric description.

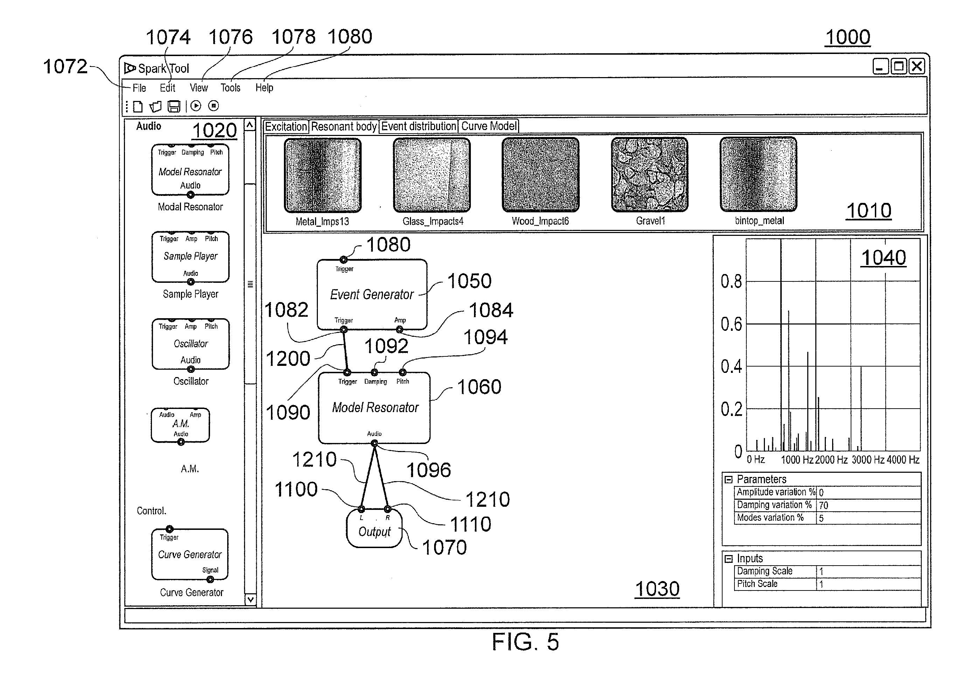

An interface for generating audio data in accordance with embodiments of the present invention will now be described with reference to Figure 5.

Figure 5 is a schematic diagram of an audio data generation interface 1000 for generating audio data in accordance with embodiments of the present invention. The interface 1000 allows a sound designer to control how the audio data for output is generated. The interface 1000 is implemented by the system unit 10 under appropriate software and/or hardware control so that the interface 1000 can be displayed on the display 300.

The audio data generation interface 1000 comprises an audio model selection interface 1010 (also referred to as object library) for selecting an audio model to use for audio data generation, a module selection interface 1020 (also referred to as a module library) for selecting a module for controlling how the audio data is generated, a module arrangement interface 1030 (also referred to as a patch view), and a parameter control interface 1040 (also referred to as a properties pane) for controlling and/or editing parameters of a module.

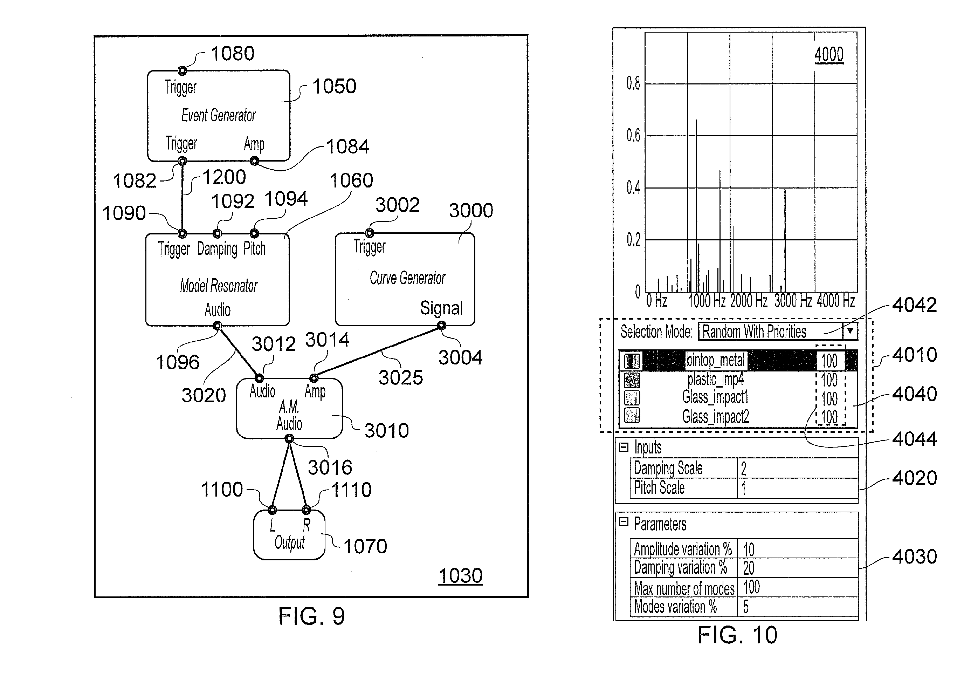

The module selection interface 1020 comprises a plurality of icons which correspond to modules for audio data generation in accordance with embodiments of the present invention. The modules will be described in more detail below with reference to Figure 9.

To generate audio data for output, in embodiments, the sound designer can drag and drop one or more modules from the module selection interface 1020 to the module arrangement interface 1030. In the embodiment shown in Figure 5, the module arrangement interface 1030 comprises an event generator module 1050, a modal resonator module 1060 and an output module 1070. The event generator module comprises a trigger input 1080, a trigger output 1082, and an amplitude output 1084. The modal resonator module comprises a trigger input 1090, a damping input 1092, a pitch input 1094, and an audio output 1096. The output module 1070 comprises a left audio channel input 1100 and a right audio channel input 1110.

In embodiments, one or more inputs of a module may be connected to one or more outputs of another module so that parameters of one module may be combined with one or more parameters of another module. For example, the sound designer could connect the trigger output 1082 of the event generator module 1050 to the trigger input 1090 of the modal resonator module 1060 (as indicated by line 1200) and the audio output 1096 of the modal resonator module 1060 to the left channel 1100 and the right channel 1110 of the output module 1070 (as indicated by lines 1210). Accordingly, one or more properties of a first parametric description may be combined with one or more properties of a second parametric description so as to generate audio data for output.

As mentioned above, in embodiments, the interface 1000 allows any suitable modules to be connected together as appropriate by dragging and dropping of modules from the module selection interface 1020 to the module arrangement interface 1030 and connecting the modules together. A group of modules which have been connected together are referred to as a patch. The module arrangement interface 1030 can therefore be thought of as a "patch view" of a patch. The module arrangement interface 1030 will be described in more detail later with reference to Figure 9.

In embodiments, the interface 1000 comprises a plurality of menu commands, which comprise "File" 1072, "Edit" 1074, "View" 1076, "Tools" 1078, and "Help" 1080. In an embodiment, the menu commands provide functionality as shown in Table 1 below. It will be appreciated that any other suitable menu commands could be used as appropriate and that the menu commands listed in Table 1 should be taken as non-limiting.

**Table 1**

| | | |
|---|---|---|
| **File 1072** | New | Create a new patch after a confirmation message (the current patch will be discarded). |
| | Open... | Load a patch (e.g. from HDD 400). |
| | Close | Close a patch currently being edited. |
| | Save | Save the patch currently edited to its current location on disk. Open a dialog box to select a file path if the patch has never been saved before. |
| | Save As | Open a dialog box and save the patch to a selected location. |
| | Export | Export the current patch to a proprietary PS3 binary format (.spk file). Other file formats could be used such as .wav, .mp3 and the like. |
| | Exit | Exit the Tool application after a confirmation message. |
| **Edit 1074** | Cut | Delete selected modules after copying them into memory (e.g. XDRAM 500). |
| | Copy | Copy selected modules into memory (e.g. XDRAM 500). |
| | Paste | Paste previously copied modules into the current patch. |
| | Delete | Delete selected modules (a confirmation message may appear, depending on the settings in the Options window). |
| | Select All | Select all modules of a patch. In embodiments, selected modules are displayed with a red border, although any other suitable method could be used |
| | Align | Align selected modules on one of their edges (left, right, top or bottom). |
| | Space Evenly | Space selected modules evenly either horizontally or vertically. |
| **View 1076** | Properties | Display / hide the parameter control interface 1040 (properties pane). |
| | Reset Patch View | Reset zoom and position of a patch view to a default zoom and default position. |
| | Fit in Patch View | Scale the patch so it fits in its entirety in the module arrangement interface 1030 (patch view) and centre the patch in the patch view. |
| **Tools 1078** | Options... | Opens an options window as shown schematically in Figure 14, with options as listed below: |
| | | ***AFEX plug-ins folder*:** indicates a folder where the Audio Data Generation Tool should look for audio analysis plug-ins such as AFEX plug-ins (.dll files that correspond to the various analyses available). |
| | | ***Default patch folder*:** indicates a default folder to open / save patches (for example as XML files, although any other suitable format could be used). |
| | | ***Default sample folder*:** indicates a default root folder from which audio sample files may be loaded. |
| | | ***Default export folder*:** indicates a default folder to export patches for an entertainment device such as the PS3 (e.g. binary files with an appropriate file extension such as a proprietary file format .spk or any other suitable binary format). |
| | | ***Sample editor path*:** indicates a file path to a sample editor for editing audio sample data. When pressing return in the vignette mode, the wave file will be opened in the specified sample editor. |
| | | ***Open last edited patch at start-up*:** if checked, the last patch worked on will automatically be reopened when Audio Data Generation Tool is started. |
| | | ***Confirm before deleting objects*:** if checked, a confirmation window will appear before deleting sound objects from the library and modules from the patch view. |
| **Help 1080** | Documentation... | Opens help documentation. |
| | Web Page... | Go to the Spark page in SHIP. |
| | About the Audio Data Generation Tool... | Displays version and assemblies information. |

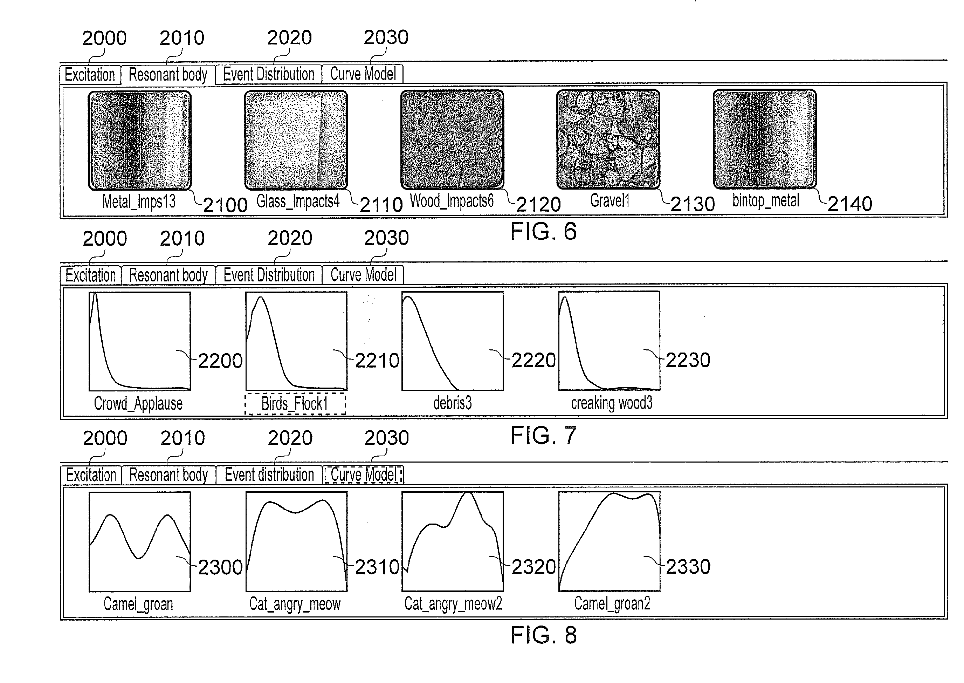

The audio model selection interface 1010 will now be described in more detail with reference to Figures 6 to 8.

As shown in Figures 6 to 8, the audio model selection interface 1010 comprises a plurality of tabs which allow the sound designer to select between different types of audio model. In embodiments, the audio model selection interface 1010 comprises four tabs which are: an excitation model tab 2000; an audio object model (resonant body model) tab 2010; an event distribution model tab 2020; and a curve model tab 2030. However, it will be appreciated that any suitable number of tabs could be used based on the number of different types of audio model. The audio models can be thought of as asset models because, in embodiments, the audio models are parametric descriptions of an audio asset such as an audio sample.

In embodiments, the sound designer can select between the tabs by clicking on a desired tab using a suitable input device such as the mouse 754. However, it will be appreciated that any other suitable input method could be used to select between tabs.

When the excitation model tab 2000 is selected (not shown), the system unit 10 causes the display 300 to display one or more icons relating to excitation models in a region of the display relating to the audio model selection interface 1010. For example, the icons of the excitation model tab 2000 could relate to a sine wave, saw-tooth wave, square wave, triangle wave and the like, although it will be appreciated that the audio models of the excitation model tab 2000 could relate to any suitable synthesised waveform. In order to generate parameters associated with the waveforms so as to generate a parametric description of features of a waveform, the system unit 10 is operable to carry out waveform synthesis using known techniques. Examples of parameters associated with a waveform such as a sine wave would be amplitude, phase, and frequency, although it will be appreciated that any suitable parameters could be used to describe a waveform as appropriate.

In some embodiments, the parameters of the parametric description relate to parameters which relate to features of a sound in the time domain. In other embodiments, the parameters of the parametric description relate to parameters which relate to features of a sound in the frequency domain. It will be appreciated that the parameters of a parametric description of a sound could relate to features of a sound in the time domain and/or frequency domain, or any other suitable feature of a sound.

Figure 6 is a schematic diagram of an interface for selecting an audio object model in accordance with embodiments of the present invention. When the audio object model (resonant body model) tab 2010 is selected, the system unit 10 causes one or more icons associated with audio objects such as resonant bodies to be displayed on the display 300 in a display region associated with the audio model selection interface 1010.

In the embodiment shown in Figure 6, the icons of the audio object model tab 2010 comprise: a metal impact icon 2100 which relates to audio features of an impact on metal; a glass impact icon 2110 which relates to audio features of an impact on glass; a wood impact icon 2120 which relates to audio features of an impact on wood; a gravel icon 2130 which relates to audio features of movement of gravel, e.g. in response to an impact on gravel; and a metal bin top icon 2140 which relates to audio features such as resonance of a metal bin top such as a lid of a dustbin. However, it will be appreciated that any other suitable icon associated with a resonant body or audio object model could be used, and that any suitable number of icons could be displayed.

In embodiments, each icon of the audio object model tab 2010 is associated with a respective parametric description of audio features associated with a sound. In embodiments, the system unit is operable to carry out audio analysis on a sound (for example represented by audio sample data) to generate, for each icon, an associated set of parameters for the respective parametric description. In some embodiments, modal analysis is carried out on the audio sample data of a sound to generate a set of parameters for a parametric description of that sound. It will be appreciated that the sound need not be represented by audio sample data but could be represented by any other suitable form of data such as a synthesised waveform, frequency domain representation, and the like.

In the embodiments where the parametric description relates to an audio object, such as a resonant body, the set of parameters comprises data relating to frequency, damping, and amplitude of each of the modes of a resonant body. In some embodiments, the set of parameters of a parametric description relating to a resonant body comprises data relating to a rate of decay of amplitude as a function of frequency.

However, it will be appreciated that any suitable set of parameters could be used. The use of audio object models to generate audio data for output will be described in more detail later below.

In some embodiments, the system unit 10 is operable to implement a proprietary Audio Feature Extraction Algorithm (AFEX) to generate the set of parameters of the parametric description of a sound. However, it will be appreciated that other publicly available audio feature extraction tools such as "Sonic Annotator" (see http://www.omras2.org/SonicAnnotator and http://www.isophonics.net/SonicAnnotator) which uses audio feature extraction algorithms such as Vamp plug-ins (see http://vamp-plugins.org/index.html and http://www.isophonics.net/sawa/) may be used. More generally, in embodiments, the system unit is operable to generate at least one of the first parametric description and the second parametric description by audio analysis of the first sound and second sound respectively.

Figure 7 is a schematic diagram of an interface for selecting an event distribution model in accordance with embodiments of the present invention.

When the event distribution model tab 2020 is selected, the system unit 10 is operable to cause one or more icons associated with event distribution models to be displayed on the display 300 in a display region associated with the audio model selection interface 1010.

In the embodiment shown in Figure 7, the icons of the event distribution model tab 2020 comprise: a crowd applause icon 2200 which relates to an event distribution model associated with a sound of applause by a crowd; a bird flock icon 2210 which relates to an event distribution model associated with a sound of a flock of birds; a debris icon 2220 which relates to an event distribution model associated with a sound of debris hitting a surface; and a creaking wood icon 2230 which relates to an event distribution model associated with a sound of creaking wood. However, it will be appreciated that the event distribution tab could display any suitable number of icons and that any suitable event distribution model of any suitable sound could be used.

In embodiments, the system unit 10 is operable to generate an event distribution model by carrying out transient analysis of audio data associated with the respective sound. Accordingly, in embodiments, an event distribution model can be used to trigger when a sound should be output, for example, to trigger when a footstep sound should be output, or when a raindrop sound should be output to simulate rainfall sounds such as those relating to a storm, light rain, drizzle and the like.

In embodiments, the combination of one or more properties of the first parametric description and one or more properties of the second parametric description comprises generating triggering data for the second sound based on one or more properties of the first set of parameters, although any appropriate set of parameters could be used. In embodiments, the triggering data is generated based on one or more event distribution models. In embodiments, the triggering data indicates when the second sound should be output, although, more generally, it will be appreciated that the triggering data could indicate when one or more sounds should be output.

In some embodiments, the triggering data comprises probability distribution data which indicates a probability that a sound (such as the second sound) should be output within a given time period. In embodiments, the event distribution model comprises or acts as a basis for the probability distribution data. For example, to simulate the sound of debris hitting a surface, the probability distribution may be represented by an event distribution curve, for example as illustrated by the debris icon 2220. In some embodiments, the probability distribution is dependent upon a time dependent property of the first set of parameters, although it will be appreciated that the probability distribution could be dependent upon a time dependent property of one or more sets of parameters of one of more respective parametric descriptions.

It should be understood that the term "time dependent property" can be taken to mean any property of a sound such as number of maximal amplitude peaks per second, volume, frequency, and the like which evolves or varies with time. For example, referring again to the debris icon 2220, and taking the horizontal direction to be time and the vertical direction to be a value on an arbitrary scale, then the probability of an event triggering at a given time can be made dependent on the value of the curve at that time.

In other embodiments, the triggering data comprises event frequency data which relates to a number of times that the second sound should be output within a given time period. In embodiments, the event distribution model comprises or acts as a basis for the event frequency data. For example, to simulate the sound of crowd applause, a sound to be triggered could correspond to the sound a clap. The event frequency data may be represented by an event frequency curve, such as that illustrated by the crowd applause icon 2200. Again, taking the horizontal axis as time, then the frequency of triggering events can be made responsive to the value of the curve at that time.

Thus, it will be appreciated that the event distribution data could be used to generate a curve which indicates how one parameter (such probability of event occurring, number of events and the like) varies with another parameter (such as time). The relationship between the parameters may be used to generate the triggering data such as the event frequency data and the probability distribution data. However, it will be appreciated that any suitable triggering data could be generated as appropriate based on an event distribution model.

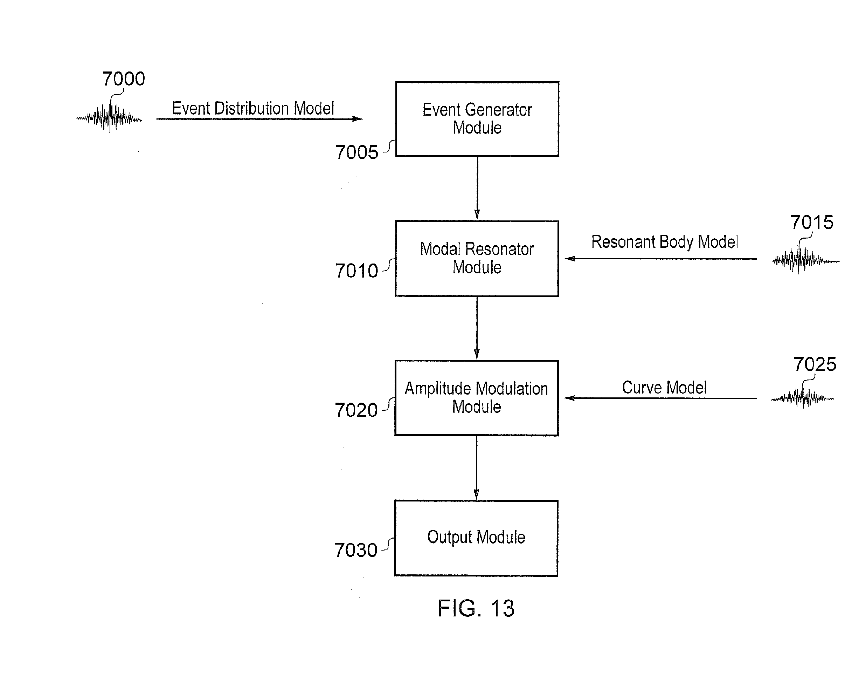

An example of the use of event distribution model to generate audio data for output will be described in more detail later below with reference to Figure 13.

Figure 8 is a schematic diagram of an interface for selecting a curve model in accordance with embodiments of the present invention. When the curve model tab 2030 is selected, the system unit 10 is operable to cause one or more icons associated with curve models to be displayed on the display 300 in a display region associated with the audio model selection interface 1010.

In the embodiment shown in Figure 8, the icons of the curve model tab 2030 comprise: a first camel groan icon 2300 which relates to an audio feature of a first sound of a camel groaning; a first angry cat meow icon 2310 which relates to an audio feature of a first meow sound of an angry cat; a second angry cat meow icon 2320 which relates to an audio feature of a second meow sound of an angry cat; and a second camel groan icon 2330 which relates to an audio feature of a second sound of a camel groaning. However, it will be appreciated that the curve model tab 2030 could display any suitable number of icons and that any suitable curve model of any suitable sound could be used.

In embodiments, a curve model comprises curve data relating to at least one of: a pitch contour of a sound; an amplitude envelope of a sound; and spectral flux of a sound, although it will be appreciated that the curve model could comprise any suitable curve data relating to any suitable audio feature of a sound. More generally, in embodiments, at least one of the first parametric description and the second parametric description comprises audio envelope data which relates to an audio envelope of the first sound or second sound respectively.

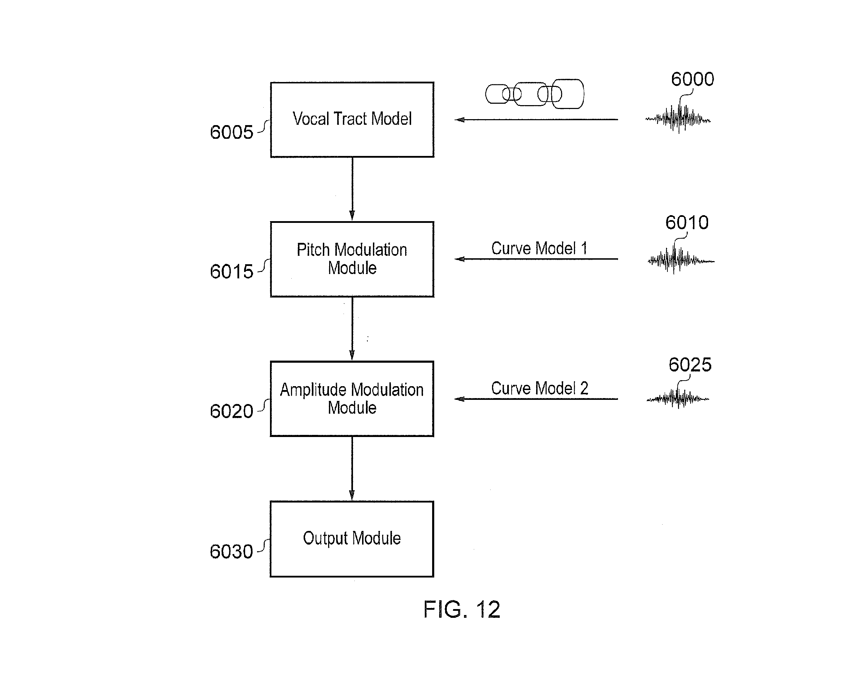

To generate a curve model, in embodiments, the system unit 10 is operable to carry out audio analysis on audio sample data or other suitable audio data to extract audio features such as an amplitude envelope, spectral flux, pitch contour and the like using the AFEX algorithm, although, as mentioned above, any other suitable audio feature extraction algorithm such as those provided by "Sonic Annotator" could be used. It will be appreciated that any other suitable audio feature such as, for example:
- mean, variance, deviation, kurtosis, skewness, etc.
- noisiness/harmonicity etc
- loudness (rms)
- spectral features such as main peaks, spectral centroid, rolloff and slope
- linear prediction for source/resonance separation
- energy in different frequency bands
- distribution of transients in the sound effect
- clustering of harmonics
could be extracted so as to generate a curve model, although it will be appreciated that any appropriate audio feature(s) could be extracted. An example of the use of a curve model to generate audio data for output will be described in more detail later below with reference to Figure 12.

The module arrangement interface 1030 will be described in more detail with reference to Figure 9.

Figure 9 is a schematic diagram of module arrangement interface 1030 (patch view) for arranging modules to generate audio data in accordance with embodiments of the present invention. As mentioned above, the module arrangement interface 1030 is an interface which allows an audio designed to create patches to generate audio data for output.

In embodiments, to create a patch, a sound designer can click on a module in the module library 1020 and drag that module from the module library 1020 to the patch view 1030. In embodiments, a sound designer can select a module by "left clicking" with a mouse to select the module, although it will be appreciated that other methods of selecting a module are possible.

The system unit 10 would then cause the selected module to become highlighted, for example by displaying a red border around the selected module. Additionally, in embodiments, parameters associated with a selected module can be displayed in the properties pane 1040 when an module is selected, and if the properties pane is currently being displayed. In embodiments, a sound designed can select one or more modules in the patch view 1030 by clicking and dragging a box around modules they wish to select in a similar way commonly used to select objects in a graphical user interface such as Microsoft Windows® (so-called "rubber-band" selection). A sound designer may also copy and/or paste modules from a context menu or an edit menu. However, it will be appreciated that any suitable method for selecting, copying, pasting, and other control operations carried out on the modules could be used.

The patch view 1030 allows a sound designer to "connect" two modules together. In embodiments, a sound designer can cause an output or input of a module to be connected to a respective input or output of another module by left clicking on a module output, dragging the mouse 754 so that the mouse cursor correspond to a respective input or output of another module and releasing the left mouse button. For example, referring to Figure 9, a sound designer may left-click on the trigger output 1082 of the event generator module 1050 and drag the mouse cursor to be positioned at a screen position corresponding to the trigger input 1090 of the modal resonator module 1060. However, it will be appreciated that any other suitable method for connecting the modules may be used.

For the sake of clarity, the term "connect" should be understood to mean that one or more properties, parameters or other data associated with a first module may be communicated with a second module that is connected to the first module.

In embodiments, the operation of the patch view 1030 will only allow input and outputs of the same type to be connected together. For example, the trigger output 1082 can be connected to the trigger input 1090 (where the input/output type would be considered to be "control"). More generally, each module comprises one or more inputs and/or outputs each having an associated type. In embodiments, there are three "types" or output/input, which are: audio type, which relates to audio data; control type, which relates to control data; and logic type, which relates to logic data. However, it will be appreciated that any other suitable input/output data types could be used.

In embodiments, a module output can be connected to a plurality of module inputs, but a module input can only be connected to one module output. However, it will be appreciated that in other embodiments, the module inputs and module outputs may be connected in any other suitable manner. In embodiments, to remove a connection, a sound designer may right click on an input or output of a module which they wish to disconnect and select "disconnect wire" from a context menu. However, it will be appreciated that any other suitable method for disconnecting an input and output could be used.

In embodiments, a sound designer may navigate around the patch view 1030 by left clicking and dragging the mouse by holding down an appropriate key (such as CTRL) on the keyboard 753 so as to move the whole patch view 1030. Additionally, where the mouse 754 has a mouse wheel, the mouse wheel could be used to zoom in and out. Other options for viewing the patch view 1030 can be accessed via the "view" menu as described above. It will of course be appreciated that any other suitable method for controlling viewing of the patch view 1030 may be used.

As mentioned above, the module library 1020 displays icons associated with modules so that a sound designer can select a module to include in a patch. Details of modules in accordance with embodiments of the present invention are given below.

### Event Generation Modules

In embodiments, event generation modules relate to when a sound should be triggered.

### Start Module

In embodiments, a start module generates a single triggering signal to output to one or more other modules.

### Event Generator Module

In embodiments, an event generator module generates triggering data which triggers sounds (e.g. in response to in-game events) based on a distribution model from the object library. In embodiments, the events generated can be based exactly on an original audio signal from which an event distribution is generated, or be a random variation of the event distribution.

### Audio Generation Modules

In embodiments, audio generation modules are polyphonic. Each time an audio generation module is triggered, that audio generation module will try to start a new voice. Therefore, in order to try to prevent a cacophony of sound and reduce processing resources, in embodiments, audio generation modules have associated polyphony parameters which relate to parameters which govern how different voices should be output.

In embodiments, the polyphony parameters comprise parameters which relate to a maximum number of voices the respective module can play simultaneously. In embodiments, the polyphony parameters can also be used to indicated how a module should behave when the module attempts to start a new voice when the maximum number of voices limit is reached or exceeded. In some embodiments, the polyphony parameters can indicate that the module should operate in one of three behaviours: reject the newest voice; stop the oldest voice; or stop the quietest one. However, it will be appreciated that any other suitable method for prioritising voices could be used. Here, the term "voice" should be taken to mean any suitable sound for example, audio sample data, synthesised waveform data, modal resonator model data and the like, although any suitable audio data could be used.

### Modal Resonator Module

A modal resonator module uses data from one or more audio object models (resonant bodies) from the object library 1010 so as to generate audio signal data for output and/or audio signal data that can be processed by another module. Modal resonator modules are especially useful if a sound designer wishes to cause the system unit 10 to synthesize metallic, wooden and/or glass impact (i.e. resonant) sounds. Other such sounds include but are not limited to plucked strings and Helmholz resonators (such as organ pipes).

In embodiments, parameters of a modal resonator module allow various different features of a parametric description to be set. In some embodiments, the set of parameters associated with a modal resonator module comprise one or more of: variation percentages for the modes amplitude; frequency of one of more modes; and damping of one or more modes. In embodiments, the parameters of a modal resonator module allow a sound designer to set a maximum number of modes to use when generating a sound. This advantageously reduces a processing load on a processor used to generate the audio data for output.

It will be appreciated that the parameters of a modal resonator module could comprises any suitable parameter associated with one or more properties of a parametric description of an audio object model.

### Sample Player Module

In embodiments, a sample player module is operable to generate audio sample data for output and/or for use by another module based on one or more audio data sample files, such as .wav files, although any other suitable audio data sample file could be used. Typically, duration of audio sample data generated by a sample playing module when reproduced is of the order of a few seconds (typically less than 3 seconds). This allows a sample to be used with synthesised sounds and procedural audio data generation which is typically used for short duration sounds such as impacts, footsteps, raindrops and the like. However, it will be appreciated that any suitable length of duration of audio sample data could be used. In embodiments, audio signal data comprises the audio sample data, although it will be appreciated that the audio signal data could comprise any suitable type of audio data.

### Update Modules

Update modules relate to how a sound evolves when one or more sounds is output. In embodiments, an update module is operable to generate update data which indicates a degree of modification with respect to time of one or more properties of a parametric description of a sound.

Referring to Figure 4, in embodiments at least one of the first parametric description and the second parametric description comprise update data which indicates a degree of modification with respect to time of the combination of the one or more properties of the first parametric description and the second parametric description.

### Curve Generator Module

In embodiments, a curve generator module is operable to generate curve data for output to another module based on one or more curve models (for example a curve model described above with reference to Figure 8). In some embodiments, a curve generator module is operable generate curve data so as to replicate the original envelope of the sound from which the associated curve model was generated.

In other embodiments, a curve generator module is operable to generate a random variation (e.g. within a predetermined tolerance) of the original envelope of the sound from which the associated curve model was generated. However, it will be appreciated that a curve generator module may generate curve data based on one or more curve models in any suitable manner.

### Amplitude Modulation (AM) Module

In embodiments, an amplitude modulation module is operable to perform amplitude modulation on audio signal data, such as audio signal data generated by a modal resonator module or sample player module, although it will be appreciated that any suitable audio signal data could be used.

In embodiments, an amplitude modulation module comprises an amplitude input. When the amplitude input is connected to an output of a curve generator module, the amplitude modulation module is operable to apply amplitude modulation to an audio data signal generated by another module (such as a modal resonating module or a sample playing module) based on the curve data generated by the curve generator module. In other words, an amplitude modulation module allows an amplitude modulation envelope to be applied to one or more sounds.

### Miscellaneous Modules

### Mixer Module

In embodiments, a mixer module is operable to mix two or more audio data signals together using known audio mixing techniques. In some embodiments, the maximum number of audio data signals is four, but it will be appreciated that in other embodiments, any suitable number of audio signals could be mixed together.

### Audio Output Module

In embodiments, an audio output module is operable to generate the audio data for output (for example as a binary file or any other appropriate audio file) and indicates the end of a patch. In embodiments, in order for the software implementing the patch view 1030 to consider a patch valid, an output module must be present in the patch for that patch to be considered valid. For the sake of clarity, the term "patch" should be considered to mean two or more modules connected together.

It will be appreciated that other modules could be used. For example, the system unit could implement other update modules such as a spectral flux module which modulates spectral flux of one or more audio data signals based on a curve model, a pitch modulation module which modulates a pitch of one or more audio data signals based on a curve model, although it will be appreciated that many other types of module could be used.

Referring back to Figure 9, the patch shown in the embodiment illustrated with respect to Figure 9 comprises an event generator module 1050, a modal resonator module 1060, a curve generator module 3000, an amplitude modulation module 3010, and an output module 1070. The trigger output 1082 of the event generator module 1050 is connected to the trigger input 1090 of the modal resonator module 1060 as indicated by line 1200.

The curve generator 3000 comprises a trigger input 3002 and a signal output 3004 for outputting curve data. The amplitude generator module 3010 comprises an audio input 3012 for inputting audio signal data to the amplitude modulation module 3010, and amplitude modulation input 3014 for inputting curve data to the amplitude modulation module 3010, and an audio signal output 3016 for outputting audio signal data to one or more other modules.

In the embodiment illustrated with respect to Figure 9, the audio output 1096 of the modal resonator module 1060 is connected to the audio input 3012 of the amplitude modulation module 3010 as indicated by line 3020. The signal output 3004 of the curve generator module 3000 is connected to the amplitude modulation input 3014 of the amplitude modulation module 3000 as indicated by line 3025. The audio signal output 3016 of the amplitude modulation module 3000 is connected to the left channel 1100 and the right channel 1110 of the output module 1070.

Therefore, the patch of the embodiment illustrated in Figure 9 is operable to generate audio data for output by triggering the modal resonator based on an event distribution model, and apply amplitude modulation to the output of the modal resonator based on a curve model. Accordingly, embodiments of the present invention allow multiple audio events such as those raindrops, footsteps and the like to be generated quickly and easily whilst reducing processing resources needed to implement those audio events.

The parameter control interface 1040 (also referred to as a properties pane) will now be described in more detail with reference to Figure 10. Figure 10 is a schematic diagram of an interface for controlling parameters of a module in accordance with embodiments of the present invention. In particular, in the embodiment shown in Figure 10, the parameter control interface 1040 comprises: a graphical properties display region 4000 for displaying a graphical representation of properties of a parametric representation and/or a graphical representation of one or more features of parameters of a parametric description; a model selection region 4010; an input control region 4020; and a parameter control region 4030.

The graphical display region 4000 allows a graphical representation of properties of a features of a sound to be displayed such as those relating to a parametric representation of a sound, one or more features of parameters of a parametric description, and one or more features of audio objects (e.g. curve model, resonant body model, event distribution model and the like). In the embodiment shown in Figure 10, the graphical display region 4000 comprises a graphical representation of modes of a resonant body. However, it will be appreciated that any other suitable graphical representation could be displayed. The graphical display region 4000 allows a sound designer to view properties of a sound so as to assist in the sound design process.

In embodiments, each module may be associated with one or more models from the object library, such as event distribution models, resonant body models, excitation models, curve models and the like. In embodiments, when generating audio for output, a module will use relevant data from a model(s) to generate an appropriate output. To associate a model with a module, a sound designer can click and drag a model from the obj ect library 1010 onto to a module in the patch view 1030. The system unit 10 then associates that model with the module onto which the model was dragged and dropped. However, it will be appreciated that any other suitable method for associating one of more models with a module may be used.

The model selection region 4010 comprises a model name display region 4040 and a selection mode region 4042. In embodiments, each model is associated with model metadata which comprises metadata such as model name, date model created, file size, and the like although it will be appreciated that the model metadata could comprises any suitable metadata.

The system unit 10 is operable to control the model name display region 4040 so that the model display region 4040 displays the name or names of the models associated with a particular module. In some embodiments, the system unit 10 is operable to display an icon associated with a model next to the model name so as to aid the sound designer in recognising a model quickly.

In the embodiment illustrated in Figure 10, the model display region 4040 shows the names and associated icons of four resonant body models: a metal bin top resonant body model which relates to a metal bin top; a plastic impact resonant body model which relates to a sound of plastics material hitting a surface; a first glass impact resonant body model; and a second glass impact resonant body model. In this embodiment, the resonant body models displayed in the model name display region 4040 are associated with the modal resonator module 1060 although it will be appreciated that any appropriate model(s) could be associated with the modal resonator module 1060.

To select a model to view parameters of that model, a sound designer may click on the desired model name using the mouse 754, although any other suitable selection method could be used.

It will be appreciated that one or more names of any suitable model associated with a module could displayed in the display region 4040. For example, the curve generator module 3000 could be associated with three curve models such as: a first angry cat meow model associated the icon 2310 mentioned above with respect to Figure 8; a second angry cat meow model associated with the icon 2320 mentioned above with respect to Figure 8; and a first camel groan model associated with the first camel groan icon 2300 mentioned above with respect to Figure 8. However, it will be appreciated that a curve generator module could be associated with one or more curve models as appropriate.

In embodiments, audio data for output may be generated in dependence upon a selection mode. The selection mode determines how the models associated with a module are selected for generating audio data, for example, when the audio data is output (e.g. when a sound is played during a game in response to an in-game event). In embodiments, there are four selection modes, although it will be appreciated that any appropriate number of selection modes could be used. The selection mode region 4042 allows a sound designer to select a selection mode by using a drop-down box as commonly known in the art, although the skilled person would appreciate that other methods of selecting a selection mode are possible.

In embodiments, each model has an associated priority value which is indicative of a when that model should be selected. In some embodiments, the priority value is used to select which model to use for generating the audio output data. Whether the priority value is used to select a model depends on which selection mode is designated.

The four selection modes according to an embodiment of the invention are illustrated in Table 2 below.

**Table 2**

| **Mode** | **Function** |
|---|---|
| Random | Randomly selects one of the models named in the model name display region 4040 |
| Random with priorities | Randomly selects one of the models named in the model name display region 4040 based on a weighting associated with the priority value for a model |
| Shuffle | Randomly selects one of the models named in the model name display region 4040 but each model has to have been selected once before a repeat selection can be made |
| Sequential | Selects a model in sequence as listed in the model name display region 4040 |

In embodiments, the priority value for each model is displayed next to the model name in a priority value display region 4044, although it will be appreciated that any suitable method for displaying the priority value for a model could be used. In embodiments, the priority values are integers and the range of possible priority values is from 1 to 100, although any other suitable representation (e.g. single precision, double precision, hexadecimal and the like) could be used to indicate the priority value and any suitable range could be used.

In the embodiment shown in Figure 10, each model has a priority value of 100. Therefore, when the selection mode "Random with priorities" is selected, each model has an equal probability of being selected when the audio is output. However, a lower priority value would mean that a model has a lower probability of being selected.

In embodiments, the system unit 10 allows the sound designer to edit the priority value via a suitable text input when that model is highlighted, although any other suitable method could be used. In embodiments, the default priority value for each model is 100 although it will be appreciated that any other appropriate default value could be used.

In some embodiments, one or more models can be temporarily enabled / disabled from being used in a patch so as to allow the sound designer to test different configurations and which models provide a desired effect. In embodiments, a sound designer may enable / disable a model by double clicking on the model in the model name display region 4040 and the system unit 10 will cause the disabled model to appear greyed out. However, it will be appreciated that this may be accomplished in any other suitable manner. In embodiments, all models are enabled by default although it will be appreciated that other suitable defaults could be set.

The input control region 4020 allows a sound designer to edit input properties such as damping scale, pitch scale and the like, although it will be appreciated that any other suitable input properties could be edited via the input control region 4020.

The parameter control region 4030 allows a sound designer to edit parameters of a model, such as parameters of a event distribution model, resonant body model, excitation model, curve model and the like, although it will be appreciated that parameters of any suitable model could be edited as appropriate. In the embodiment shown in Figure 10, the parameter control region 4030 allows a sound designer to edit amplitude variation parameters, damping variation parameters, maximum number of modes, and modes variation. However, it will be appreciated that any other suitable parameters of a module could be edited using the parameter control region 4030.

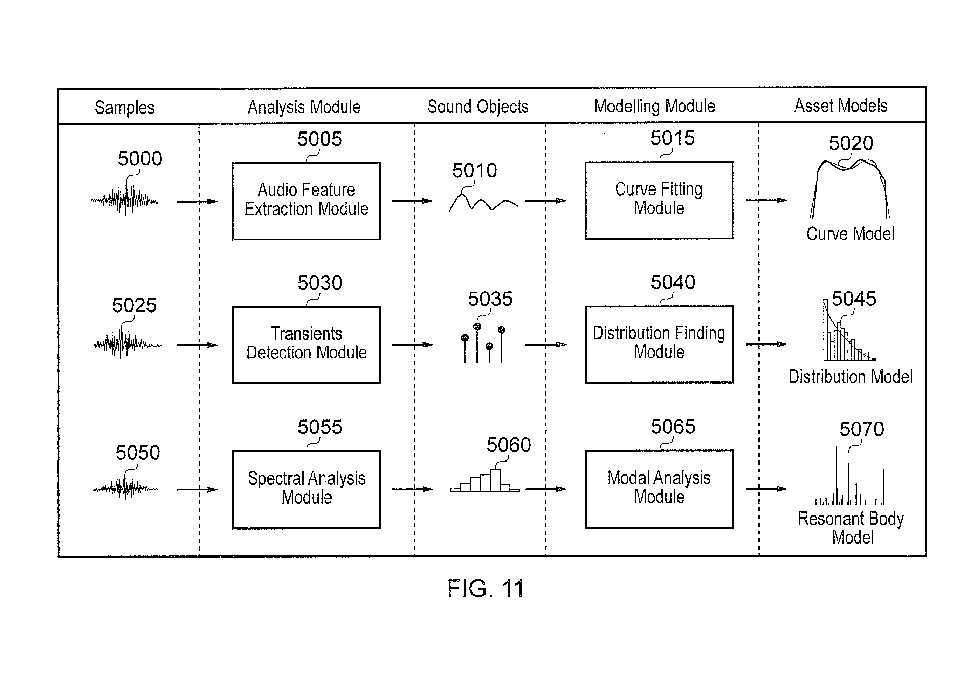

The generation of asset models will now be described in more detail with reference to Figure 11.

Figure 11 is a schematic diagram of generation of asset models (audio object models) in accordance with embodiments of the present invention.

Figure 11 schematically illustrates how curve models, event distribution models, and resonant body models are generated in accordance with embodiments of the present invention. The system unit 10 is operable to implement the functionality of the embodiments described herein to generate the audio assets under software control although it will be appreciated that any other suitable apparatus and method may be used to generate the asset models.

To generate a curve model, an audio sample 5000 (such as recorded audio data relating to a cat meow) is input to an audio feature extraction module 5005. The audio feature extraction module 5005 (e.g. implementing the AFEX algorithm or other suitable algorithm as mentioned above) extracts one or more audio features of the sample 5000 to generate sound object data 5010 which represents one or more audio features of the sample 5000. A curve fitting module 5015 then carries out curve fitting on the sound object data 5010 using known curve fitting techniques so as to generate a curve model 5020, such as a curve model relating to amplitude envelope, spectral flux, pitch contour and the like although it will be appreciated that any suitable curve model could be generated.

To generate a distribution model, an audio sample 5025 (such as recorded audio data relating to crowd applause, debris impact and the like) is input to a transients detection module 5030 so as to generate sound object data 5035 which represents transient events in the audio sample 5025. The transients detection module 5030 is operable to implement known transient detection techniques such as boundary segmentation although other appropriate techniques could be used. A distribution finding module 5040 processes the sound object 5035 using known techniques to generate an event distribution model such as those described above with respect to Figure 7.

To generate a resonant body model, an audio sample 5050 (such as recorded audio data relating to a metal object being struck and caused to resonate) is input to a spectral analysis module 5055. The spectral analysis module 5055 is operable to carry out spectral analysis on the sample 5050 using known techniques such as Fast Fourier Transform, wavelet transform and the like although any suitable spectral analysis technique could be used. The spectral analysis module 5055 generates sound object data 5060 which is indicative of spectral features of the sample 5050. The sound object data 5060 is input to a modal analysis module 5065 which carries out modal analysis on the sound object data 5060 using known techniques so as to generate a resonant body model 5070 such as those described above with reference to Figure 6.

Some examples of audio data generation in accordance with embodiments of the present invention will now be described with reference to Figures 12 and 13.

Figure 12 is a schematic diagram of an example of generation of audio data relating to game creature vocalisations in accordance with embodiments of the present invention. In the embodiment shown in Figure 12, a vocal tract model is generated from an audio sample 6000 corresponding to an audio recording of a creature used in a game, such as a recording of a meow of a first cat. The system unit 10 generates a vocal tract model 6005 using known techniques. To generate audio data for output, the system unit applies a first curve model (Curve model 1 e.g. corresponding to a curve model associated with icon 2310 of Figure 8), generated from an audio sample 6010 corresponding to a recording of the first cat meowing, to the vocal tract model 6005 using a pitch modulation module 6015 so as to modulate the pitch of the vocal tract model.

The output of the pitch modulation module 6015 is processed by an amplitude modulation module 6020 which applies amplitude modulation to the pitch modulated vocal tract model based on a second curve model (curve model 2 e.g. corresponding to a curve model associated with icon 2320 of Figure 8). In this example, the second curve model is generated from an audio sample 6025 of a recording of a second cat meowing.

An output of the amplitude modulation module 6020 is then processed by an output module 6030 so that the audio data can be output at a suitable point during the game (for example when a game character accidentally treads on the tail of a cat in the game). Accordingly, embodiments of the invention reduce processing resources needed to generate the sound and reduce an amount of time a sound designer may spend designing a sound.

Figure 13 is a schematic diagram of an example of generation of audio data relating to debris impacts in accordance with embodiments of the present invention.

In the embodiment shown in Figure 13 an event distribution model is generated from an audio sample 7000 corresponding to a recording of debris from an explosion hitting a surface. An event generator module 7005 (such as event generator module 1050 described above with reference to Figures 5 and 9) generates triggering data as described above based on the event distribution model.

A modal resonator module 7010 (such as modal resonator module 1060 described above) then generates, in response to the triggering data generated by the event generator module 7005, resonant body audio data based on a resonant body model (such as that corresponding to icon 2100 of Figure 6) generated from an audio sample 7015 of a metallic impact.

An amplitude modulation module 7020 (such as amplitude modulation module 3010 described above with reference to Figure 9) then applies amplitude modulation to the resonant body audio data based on a curve model generated from an audio sample 7025 so as to generate output audio data. An output module 7030 then processes the output audio data so as to output a sound based on the output audio data at an appropriate point in the game, for example, in response to a grenade exploding and resultant shrapnel hitting armour plating.

In some embodiments, when executing a game using a game engine, the system unit may reference one or more patches generated during the sound design process to generate audio data for output. In some embodiments, the game engine generates audio data for output using the models and modules specified by the sound designer of the game, based on the parameters specified by the sound designer. However, in other embodiments, the game engine may apply a random variation to one or more of the parameters specified by the sound designer. More generally, in embodiments, the system unit is operable to vary one or more properties of the parameters of at least one of the first set of parameters and the second set of parameters by a random amount.

In some embodiments, the game engine itself generates the parameters to use for the models and modules based on in game events. However, it will be appreciated that any suitable method for generating the parameters for the parametric descriptions may be used.

Although a sound designer has been referred to throughout, this term should not be considered as limiting and could be taken to mean user, operator, or any other controller (human or machine) who may use the Audio Data Generation Tool. For the sake of clarity, a parametric description of features of a sound should be understood to mean at least one of: an asset model (audio object model) as described herein; and a module as described herein.

The various methods set out above may be implemented by adaptation of an existing entertainment device, personal computer, audio processing workstation and the like, for example by using a computer program product comprising processor implementable instructions stored on a data carrier such as a floppy disk, optical disk, hard disk, PROM, RAM, flash memory or any combination of these or other storage media, or transmitted via data signals on a network such as an Ethernet, a wireless network, the Internet, or any combination of these of other networks, or realised in hardware as an ASIC (application specific integrated circuit) or an FPGA (field programmable gate array) or other configurable circuit suitable to use in adapting the existing equivalent device.

In conclusion, although a variety of embodiments have been described herein, these are provided by way of example only, and many variations and modifications on such embodiments will be apparent to the skilled person and fall within the scope of the present invention, which is defined by the appended claims and their equivalents.

## Claims

1. An audio data generation method comprising:
generating a first parametric description of features of a first sound, the first parametric description comprising a first set of parameters which relates to the features of the first sound;
generating a second parametric description of features of a second sound, the second parametric description comprising a second set of parameters which relates to the features of the second sound; and
generating audio data for output based on a combination of one or more properties of the first parametric description and one or more properties of the second parametric description.

2. A method according to claim 1, in which the combination comprises modifying one or more properties of the second set of parameters based on the first set of parameters.

3. A method according to claim 1 or claim 2, in which:
the combination comprises generating triggering data based on one or more properties of the first set of parameters; and
the triggering data indicates when the second sound should be output.

4. A method according to claim 3, in which the triggering data comprises probability distribution data which indicates a probability that the second sound should be output within a given time period.

5. A method according to claim 4, in which the probability distribution is dependent upon a time dependent property of the first set of parameters.

6. A method according to claim 3, in which the triggering data comprises event frequency data which relates to a number of times that the second sound should be output within a given time period.

7. A method according to any one of the preceding claims, in which at least one of the first parametric description and the second parametric description comprises audio envelope data which relates to an audio envelope of the first sound or second sound respectively.

8. A method according to claim 7, in which the audio envelope data relates to an amplitude modulation envelope of at least one of the first sound and the second sound.

9. A method according to any one of the preceding claims, in which at least one of the first set of parameters and the second set of parameters comprises spectral flux data of the first sound or second sound respectively.

10. A method according to any one of the preceding claims, comprising varying one or more properties of the parameters of at least one of the first set of parameters and the second set of parameters by a random amount.

11. A method according to any one of the preceding claims, in which at least one of the first set of parameters and the second set of parameters comprises waveform data which describes the waveform of the respective first sound or second sound.

12. A method according to any one of the preceding claims, comprising generating at least one of the first parametric description and the second parametric description by audio analysis of the respective first sound or second sound.

13. A method according to any one of the preceding claims, in which at least one of the first parametric description and the second parametric description comprises update data which indicates a degree of modification with respect to time of the combination of the one or more properties of the first parametric description and the second parametric description.

14. Computer software which, when executed by a computer, causes the computer to carry out a method according to any one of the preceding claims.

15. An audio data generation apparatus comprising:
means for generating a first parametric description of features of a first sound, the first parametric description comprising a first set of parameters which relate to the features of the first sound;
means for generating a second parametric description of features of a second sound, the second parametric description comprising a second set of parameters which relate to the features of the second sound; and
means for generating audio data for output based on a combination of one or more properties the first parametric description and one or more properties of the second parametric description.
